# EUROPÄISCHE PATENTSCHRIFT

(11) **EP 1 780 101 B1**
(45) Veröffentlichungstag und Bekanntmachung des Hinweises auf die Patenterteilung: **14.07.2010**
(21) Anmeldenummer: 06019738.1
(22) Anmeldetag: 21.09.2006
(51) Int. Cl.: B62D 21/15

(54) **Vorrichtung zur Aufnahme von Seitenkräften bei einem Seitenaufprall eines Kraftfahrzeugs**
Passenger-protection system to protect against side impact in a vehicle
Système de protection pour les occupants d'un véhicule contre les chocs latéraux

(30) Priorität: 29.10.2005 DE 102005051947
(43) Veröffentlichungstag der Anmeldung: 02.05.2007
(73) Patentinhaber: Dr. Ing. h.c. F. Porsche AG, 70435 Stuttgart (DE)
(72) Erfinder: Brunner, Markus, 72124 Pliezhausen (DE); Brausse, Stephan, 72800 Eningen (DE); Praznik, Franc, 71229 Leonberg (DE); Oggianu, Roberto, 71229 Leonberg (DE)

(56) Entgegenhaltungen:
- EP-A- 1 586 494
- EP-A1- 0 546 671
- DE-A1- 19 811 215
- DE-A1- 19 943 296
- JP-A- 10 218 038
- JP-A- 2002 362 415
- US-A- 2 647 791
- US-A- 5 954 390

## Beschreibung

Die Erfindung bezieht sich auf eine Vorrichtung zur Aufnahme von Seitenkräften bei einem Seitenaufprall eines Kraftfahrzeugs nach dem Oberbegriff des Anspruchs 1.

Aus der EP 0 943 530 B1 ist ein Fahrzeug mit einer Vorrichtung zur Aufnahme von Seitenkräften bei einem Seitenaufprall über eine querversteifende Baueinheit bekannt. Diese besteht aus einer Rohrkonstruktion mit zwei seitlich außenliegenden, aufrechten Verstärkungsrohren und einem sich über die Karosseriebreite erstreckenden, rohrförmigen Versteifungselement. Die aufrechten Versteifungsrohre sind mit Knotenblechen verbunden, die in den Fahrzeugaufbau eingebunden sind.

Aus der US 5,954,390 ist eine querversteifende Baueinheit in Form eines Querträgers bekannt, der durch ein Profilteil an die B-Säule angeschlossen wird. Das Profilteil befindet sich innerhalb des Säulenraums.

Ferner zeigt die EP 1 586 494 A eine dreieckförmige Rohrstruktur, bei der sich ein Rohrabschnitt schräg nach oben und ein Rohrabschnitt schräg nach unten erstreckt. Beide Rohrabschnitte sind durch ein vertikal verlaufendes Rohr miteinander verbunden.

Die EP 0 546 671 A1 beschreibt einen Cockpitquerträger, der mittels eines Befestigungsteils an der A-Säule festgelegt ist.

Aufgabe der Erfindung ist es, eine Vorrichtung in einem Kraftfahrzeug für einen Seitenaufprallschutz bzw. für die Aufnahme von Seitenkräfte zu schaffen, welche eine optimale Aufnahme dieser Seitenkräfte gewährleistet und eine einfache lagegenaue Montage ermöglicht, wobei eine gezielte Krafteinleitung in den Fahrzeugaufbau ermöglicht wird und ein optimaler Insassenschutz erzielbar ist.

Diese Aufgabe wird erfingdungsgemäß durch die Merkmale des Anspruchs 1 gelöst. Weitere vorteilhafte Merkmale beinhalten die Unteranspruche.

Mit der erfindungsgemäßen Vorrichtung wird hauptsächlich bei einem seitenaufprall bzw. bei seitlich auf ein Fahrzeug auftreffende Kräfte im Bereich einer B-Säule oder einem hinter einem Türausschnitt befindlichen Karosseriebereich erreicht, dass das Fahrzeug in diesem Bereich zusätzlich verstärkt wird, damit die Insassen bei einem Crash oder dgl. geschützt werden und dieser Karosseriebereich nicht soweit nach innen verformt werden kann, dass Insassen verletzt werden. Dieses wird nach der Erfindung errecht, indem das Stützelement aus einem vom querverlaufenden Trägerelement in einer vertikalen Ebene nach oben vorragenden Profilteil besteht, das am Trägerelement über zugerichtete Befestigungsabschnitte befestigbar ist. Des Weiteren ist das Profilteil durchgesteckt in einer fahrzeugfesten Konsole positioniert gehalten. Ein freistehender Bereich des Profilteils mit Trägerelement ist im Säulenraum vorkragend von der Konsole vorgesehen. Ein Stirnbereich des Profilteils ist mit einer Platte bzw. einer sogenannten Prallplatte versehen, die mit aufrechten Schenkeln des Profilteils verbunden ist. Die Prallplatte kann an den Seitenkanten sowie an der Oberkante abgerundet sein, so dass diese über die Kanten der Schenkel herumgeführt sind. Insbesondere ist nach der Erfindung vorgesehen, dass das Profilteil kastenförmig ausgebildet ist und aus zwei über einen Verbindungssteg verbundenen Seitenwangen besteht, die beabstandet gegenüberstehend sind und die Befestigungsabschnitte horizontal verlaufend jeweils an den Seitenwangen angeordnet sind und zwischen sich das Trägerelement aufnehmen. Durch diese Ausbildung des Profilteils können Seitenaufprallkräfte optimal auf das querverlaufende Trägerelement übertragen werden, das als Rohr oder als Blechträger jeglicher geometrischer Form ausgeführt sein kann.

Eine Befestigung des Profilteils am querverlaufenden Trägerelement erfolgt über mindestens einen relativ langen Befestigungsabschnitt, damit ein Abreißen verhindert wird. Insbesondere ist nach der Erfindung vorgesehen, dass das Profilteil an seinen Seitenwangen die in einer vertikalen Ebene abgestellte Schenkel aufweist, welche mit der Platte verbunden sind, welche direkt einer Seitenaußenwand des Fahrzeugs zugerichtet ist.

Das Profilteil ist mit seinen Befestigungsabschnitten an einer Wandung des Trägerteils befestigt und eine untere Begrenzung der Befestigungsabschnitte ist zumindestens im Bereich zwischen einer unteren Begrenzungsebene und einer darüber angeordneten oberen Begrenzungsebene des Trägerteils angeordnet. Damit das Profilteil nicht zum Trägerelement nach unten vorstehend ist und sich hierdurch evtl. sich ungünstig auf das querverlaufende Trägerelement auswirkende Verformung ergeben ist speziell vorgesehen, dass das Profilteil mit seinen horizontal verlaufenden Befestigungsabschnitten am Endrohrabschnitt mindestens in einer Rohrmittenquerebene oder darunter befestigt ist, wobei die Stirnkanten des Profilteils über die Rohrmittenquerebene hinausgeführt sind und vor einer unteren Rohrquerebene enden, welche das Rohr bzw. das Trägerelement nach unten hin begrenzt. Hierdurch wird erreicht, dass sich unterhalb des Trägerelements kein Bereich des Profilteils erstreckt und sichergestellt ist, dass sich über das hocherstreckende Profilteil nur nach oben hin ein Hebelarm ergibt und sich das Trägerelement entsprechend unter Energieaufnahme verformt und ein Überlebensraum bis zu einer gewissen Höhe der Seitenkraft sichergestellt ist.

Das Trägerelement besteht aus einem querverlaufenden Rohr und jeweils ein End-Rohrabschnitt jeder Fahrzeugseite ist mit dem Profilteil verbunden und ein weiterer anschließender querverlaufender Mittenrohrabschnitt ist über eine Schiebehülse jeweils mit dem Endrohrabschnitt verbunden. Das Rohr des Trägerelements kann im Querschnitt polygonal, rund, ellipsenförmig oder dgl. ausgeführt sein. Das Trägerelement kann auch in die Bodengruppe des Fahrzeugaufbaus als Träger integriert oder aber als geschweißter oder genieteter Träger aufgesetzt sein.

Damit beim vorgeschriebenen Test zum Seitenaufprall die Seitenkräfte optimal aufgenommen werden, ist nach der Erfindung des Weiteren vorgesehen, dass das über der Konsole des Fahrzeugaufbaus in Lage gehaltene Profilteil oberhalb eines Fahrzeugschwellers und beabstandet zu einer Seitenaußenwand des Fahrzeugaufbaus angeordnet ist und die Konsole einerseits an einem einen Schweller bildenden Blechformteil und andererseits an einer Wandung des Fahrzeugsaufbaus angebunden ist.

Zur Anpassung an ein Fahrzeug mit Mitteltunnel ist nach der Erfindung vorgesehen, dass der Mittenrohrabschnitt einen einen Mitteltunnel des Fahrzeugaufbaus übergreifenden trapezförmigen Bereich aufweist und die anschließenden sich quer erstreckenden Rohrabschnitte tiefergelegen sind und koaxial zu den Endrohrabschnitten verlaufen. Bei einer aufzunehmenden Seitenkraft können sich die quererstreckenden Rohrabschnitte bzw. Trägerelementeabschnitte über den trapezförmigen Bereich teilweise am Mitteltunnel abstützen, damit das querverlaufende Trägerelement nicht mit einem Profilteil zur anderen Seite des Fahrzeugs durchschlagen kann.

Ein Ausführungsbeispiel der Erfindung ist in den Zeichnungen dargestellt und wird im Folgenden näher beschrieben.

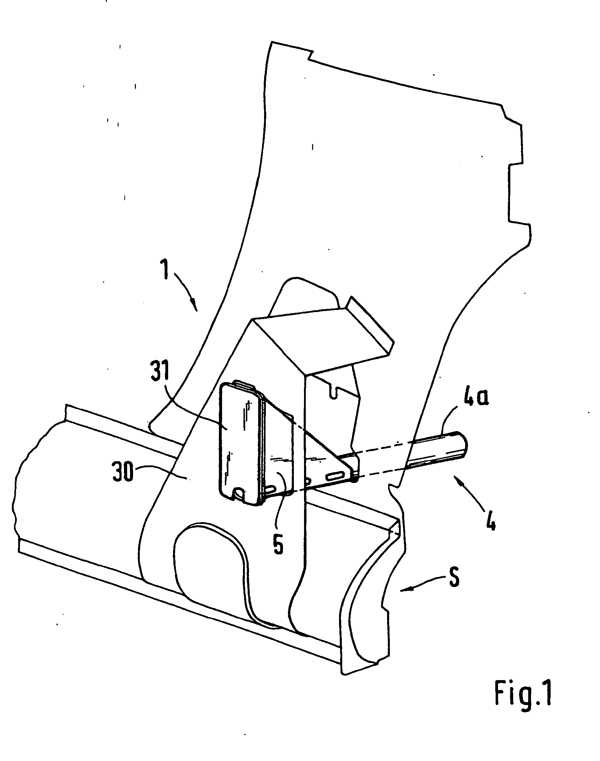

Es zeigen
- Fig. 1: eine schaubildliche Darstellung der Vorrichtung von außen auf eine Seitenaufprall-Baueinheit mit Stützelement und Trägerteil sowie Haltekonsole,

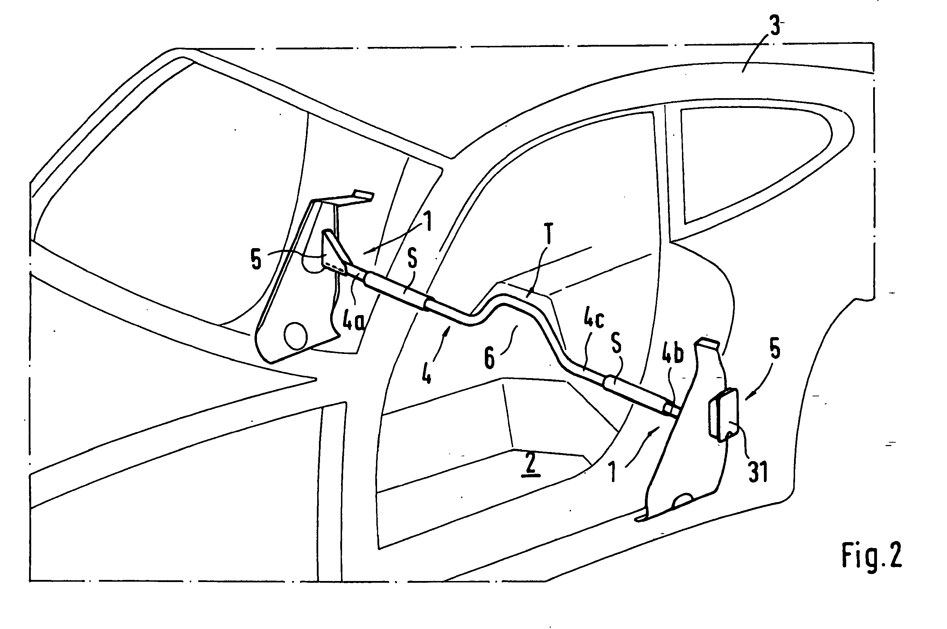

- Fig. 2: eine schaubildliche Darstellung der Vorrichtung im Fahrzeug,
- Fig. 3: einen Vertikalschnitt durch die Vorrichtung im Fahrzeug,
- Fig. 4: eine schaubildliche Darstellung des Stützelements mit verbundenem Trägerelement,

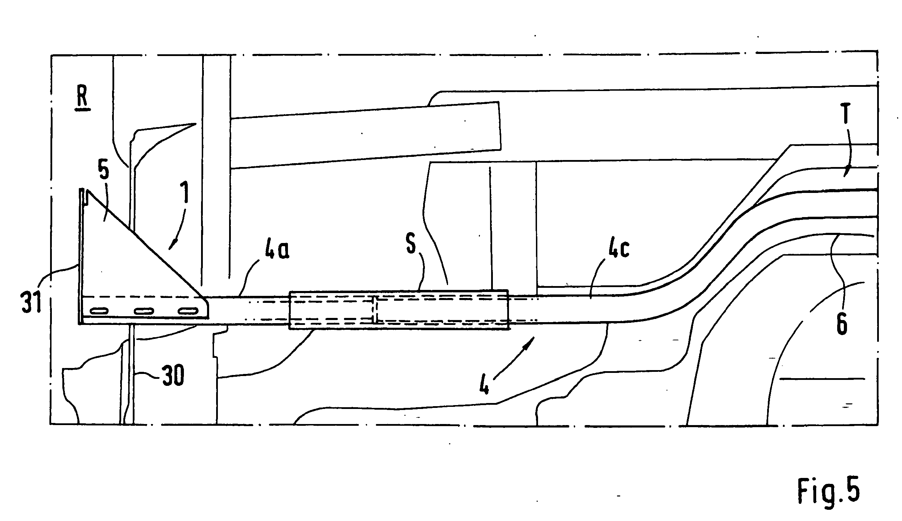

- Fig. 5: eine Teilansicht auf die Vorrichtung gem. Fig. 2,

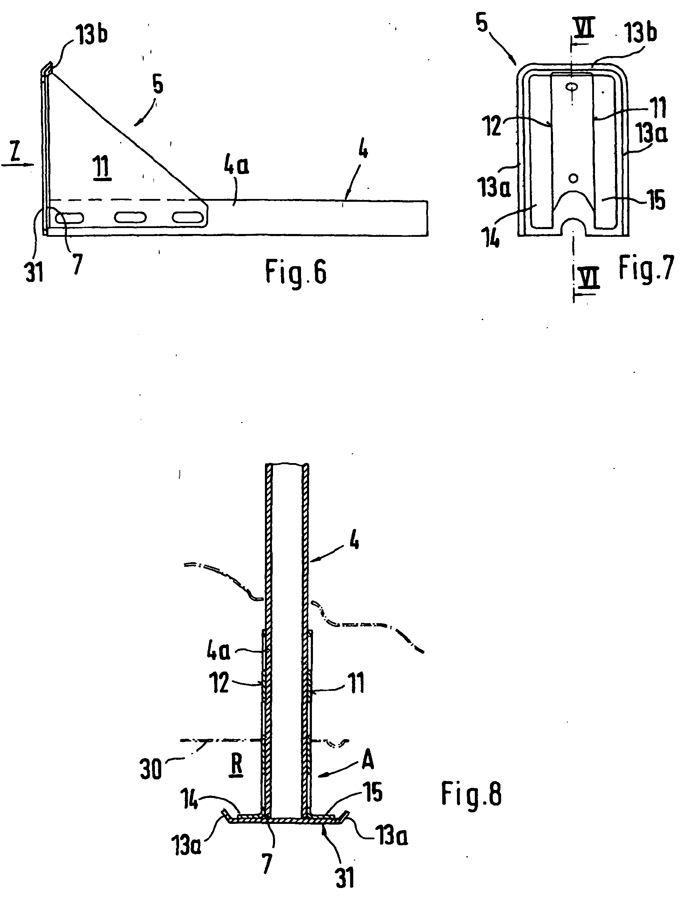

- Fig. 6: eine Seitenansicht auf das Stützelement mit verbundenem Trägerelement,
- Fig. 7: eine Ansicht auf die Vorrichtung mit Stützelement und Trägerelement in Pfeilrichtung Z gesehen und
- Fig. 8: einen Horizontalschnitt durch die Vorrichtung.

Eine Vorrichtung 1 zur Aufnahme von Seitenaufprallkräften in Pfeilrichtungen A (Kraftrichtung ist nur symbolisch dargestellt) umfasst im Wesentlichen im Fahrzeugaufbau 2 ein quer im Fahrzeug 3 verlaufendes Trägerelement 4 und ein mit diesem verbundenes Profilteil 5, das jeweils endseitig des Trägerelements 4 befestigt ist. Das Trägerelement 4 kann am Fahrzeugboden befestigt sein und einen den Boden angepassten Verlauf, insbesondere über einen Mitteltunnel 6 hinweg aufweisen, wozu das Trägerelement 4 korrespondierend zu diesem einen entsprechenden Verlauf mit einem trapezförmigen Übersprung T aufweist.

Die Vorrichtung 1 ist in der Weise ausgelegt, dass bei einem Seitenaufprall mit einer vorgegebenen Kraft ein Überlebensraum für die Insassen verbleibt. Das heißt, die Vorrichtung 1 ist vorzugsweise im Bereich einer B-Säule bzw. in einem entsprechenden Kraftfahrzeugbereich angeordnet, welcher nicht unbedingt eine ausgeprägte B-Säule aufweisen muss.

Das Trägerelement 4 ist in dem dargestellten Beispiel aus einem Rohr runden Querschnitts bestehend. Denkbar sind auch Trägerelemente 4 aus Rohren polygonaler Form oder anderen geometrischen Querschnitten, wie beispielsweise ellipsenförmig oder dgl.. Auch kann das Trägerelement 4 aus Blechteilen zusammengesetzt sein, die einen Blechträger ergeben, der aus einem offenen oder geschlossenen Profil bestehen kann. Auch sind nach der Erfindung energieaufnehmende Wellrohre und dgl. möglich.

Das Profilteil 5 der Vorrichtung 1 besteht aus einem vom querverlaufenden Trägerelement 4 in einer vertikalen Ebene nur nach oben vorragenden sogenannten Stützelement, welches jeweils mit einem freien Ende 7 des Trägerelements 4 abschließt. Über einen horizontalen Befestigungsabschnitt 8 am Profilteil 5 erfolgt eine Verbindung mit dem Trägerelement 4. Mittels einer fahrzeugfesten Konsole 30, die Bestandteil des Fahrzeugaufbaus 2 des Fahrzeugs 3 sein kann, wird die Vorrichtung 1 im Fahrzeug 3 positioniert in Lage gehalten. Das Trägerelement 4 sowie das Profilteil 5 ragen durch eine Öffnung 32 der Konsole 30 hindurch und der hindurchragende Abschnitt A ist freikragend im Raum R des Fahrzeugaufbaus 2 angeordnet.

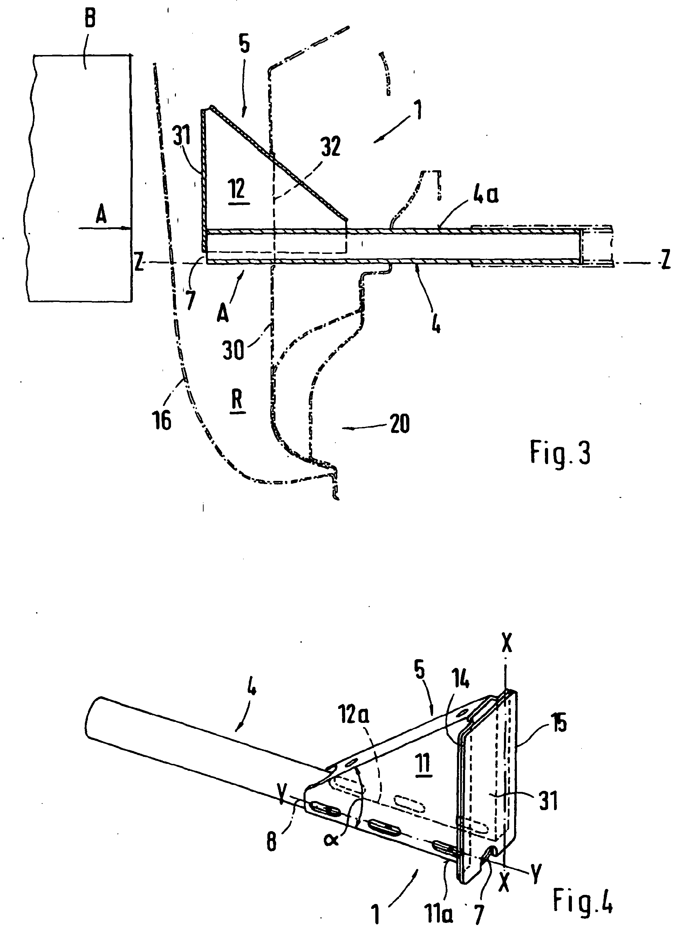

Das Profilteil 5 ist etwa kastenförmig ausgeführt und umfasst zwei zueinander beabstandete Seitenwangen 11 und 12, die kopfseitig über einen Steg 13 miteinander verbunden sind. Das Profilteil 5 ist von der Seite her gesehen dreieckförmig ausgeführt, wobei der Steg 13 schräg verlaufend ausgeführt ist und zum Trägerelement 4 hin auslaufend ist, wie auch in Fig. 4 näher gezeigt wird.

Die Seitenwangen 11, 12 des Profilteils 5 umgreifen das Trägerelement 4 peripher von außen, wie in dem gezeigten Ausführungsbeispiel mit einem Rohr dargestellt ist und die Seitenwangen 11, 12 sind über die in einer horizontalen Ebene X-X verlaufenden Befestigungsabschnitte 8 durch Schweißung oder dgl. Verfahren mit dem Rohr 4 verbunden. An einer Stirnseite des Profilteils 5 sind von den Seitenwangen 11, 12 abgestellte Schenkel 14, 15 angeordnet, welche in einer vertikalen Ebene Y-Y vorgesehen sind, die fest mit der Platte 31, die eine Prallplatte bildet, verbunden sind. Diese Platte kann an den Seitenkanten 13a und an der Oberkante 13b ausgerundet sein, derart, dass die Ausrundung um die Kanten der Schenkel 14, 15 herumgeführt sind. Die Konsole 30 ist als in Fahrzeuglängsrichtung ausgerichtetes Blechteil ausgeführt und in Querrichtung des Fahrzeugs beabstandet zur Seitenaußenwand 16 des Fahrzeugs 3 angeordnet.

Die Seitenwangen 11, 12 enden mit ihren unteren Kanten 11a, 12a entweder vor oder in einer unteren Begrenzungsebene Z-Z des Trägerelements 4 bzw. des Rohres oder darüber (Fig. 3).

Der Befestigungsabschnitt 8 und die Schenkel 14, 15 sind etwa rechtwinkelig zueinander angeordnet, so dass eine optimale Kraftaufnahme bei einem Seitenaufprall erfolgen kann. In Fig. 3 ist eine Barriere B angedeutet, mit der ein Seitenaufprall auf das Fahrzeug 3 simuliert wird.

Im gezeigten Ausführungsbeispiel ist das als Rohr ausgebildete Trägerelement 4 zur Montage unterteilt ausgeführt. So sind End-Rohrabschnitte 4a und 4b an jeder Fahrzeugseite mit dem Profilteil 5 verbunden. Ein Mittenrohrabschnitt 4c der Vorrichtung 1 wird mit den Endrohr-Abschnitten 4a, 4b jeweils über eine Schiebehülse S fest verbunden. Diese wird nach der Montage eines Seitenteils des Fahrzeugs an den übrigen Fahrzeugaufbau über die End-Rohrabschnitte 4a, 4b geschoben und verschweißt.

Wie in Fig. 3 näher dargestellt, ist die Vorrichtung 1 mit dem Profilteil 5 sowie dem Trägerelement 4 oberhalb eines Schwellers 20 des Fahrzeugs angeordnet, wobei die Konsole 30 am Schweller 20 sowie an einer Wandung des Fahrzeugaufbaus 2 gehalten ist. Der Mittenrohrabschnitt 4c übergreift den Mitteltunnel 6 des Fahrzeugaufbaus 2 und ist in diesem Bereich etwa trapezförmig ausgeführt und die anschließenden Bereiche der Rohrabschnitte, insbesondere 4a und 4b sowie Bereiche des Mittenrohrabschnitts 4c sind tiefergelegen und koaxial zu den Endrohrabschnitten 4a und 4b verlaufend angeordnet.

## Patentansprüche

1. Vorrichtung zur Aufnahme von Seitenkräften bei einem Seitenaufprall eines Kraftfahrzeugs, wobei in Querrichtung des Fahrzeugs im Fahrzeugaufbau eine querversteifiende Baueinheit angeordnet ist, die aus einem querverlaufenden Trägerelement und jeweils einem endseitig verbundenem Stützelement besteht, das im Bereich einer B-Säule oder einem entsprechenden Karosseriebereich angeordnet ist, wobei das Stützelement aus einem vom querverlaufenden Trägerelement (4) in einer vertikalen Ebene nach oben vorragendem Profilteil (5) besteht, das in einer fahrzeugfesten Konsole (30) durchgesteckt angeordnet ist und welches dem Trägerelement (4) zugerichtete horizontale Befestigungsabschnitte (8) umfasst über die das Profilteil (5) am Trägerelement (4) befestigt ist und ein freistehender Bereich (A) des Profilteils (5) im Säulenraum (R) oder im Raum des Karosseriebereichs angeordnet und beabstandet zu einer Seitenaußenwand (16) des Fahrzeugaufbaus (2) von der Konsole (30) vorkragend ist, **dadurch gekennzeichnet, dass** das Profilteil (5) etwa kastenförmig ausgeführt ist und aus zwei über einen verbindenden Steg verbundenen Seitenwangen (11, 12) besteht, die beabstandet gegenüberstehend sind und die in einer horizontalen Ebene (Y-Y) angeordneten Befestigungsabschnitte (8) des Profilteils (5) jeweils an den Seitenwangen (11, 12) angeordnet sind und zwischen sich das Trägerelement (4) haltend aufnehmen, wobei das Profilteil (5) stirnseitig der Seitenwangen (11,12) in einer vertikalen Ebene (X-X) abgestellte Schenkel (14, 15) aufweist, die mit einer die Stirnseite des Profilteils (5) abdeckenden Platte (31) verbunden sind, welche der Seitenaußenwand (16) zugerichtet ist, wobei die Seitenkanten sowie die Oberkante der Platte (31) in einer Ebene mit der Platte (31) liegen oder die Seitenkanten (13a) sowie die Oberkante (13b) abgebogen ausgeführt ist.

2. Vorrichtung nach Anspruch 1, **dadurch gekennzeichnet, dass** das Profilteil (5) mit seinen horizontalen Befestigungsabschnitten (8) an einer Wandung des Trägerelements (4) befestigt ist und eine untere Begrenzung der Befestigungsabschnitte (8) zumindest im Bereich zwischen einer unteren Begrenzungsebene (Z-Z) und einer darüber angeordneten oberen Begrenzungsebene des Trägerteils (4) angeordnet ist.

3. Vorrichtung nach den Ansprüchen 1 oder 2, **dadurch gekennzeichnet, dass** das Profilteil (5) als Blechformteil ausgeführt und im Querschnitt U-profilförmig ausgebildet ist und die horizontalen Befestigungsabschnitte (8) zu den abgestellten Schenkeln (14, 15) der Seitenwangen (11,12) etwa im rechten Winkel zueinander stehen und der verbindende Steg zwischen den beiden Seitenwangen (11, 12) mit einem spitzen Winkel (α) zu den anschließenden ersten Befestigungsabschnitten (8) verläuft.

4. Vorrichtung nach einem der vorhergehenden Ansprüche, **dadurch gekennzeichnet, dass** das Profilteil (5) mit seinen horizontal verlaufenden Befestigungsabschnitten (8) an einem End-Rohrabschnitt (4a) des Trägerelements (4) mindestens in oder nahe einer Rohrmittenquerebene befestigt ist, wobei die Stirnkanten (11a, 12a) des Profilteils (5) über die Rohrmittenquerebene hinausgeführt sind und vor der unteren Begrenzungsebene (Z-Z) enden.

5. Vorrichtung nach einem der vorhergehenden Ansprüche, **dadurch gekennzeichnet, dass** das Trägerelement (4) aus einem Rohr besteht und der jeweilige End-Rohrabschnitt (4a, 4b) jeder Fahrzeugseite mit dem Profilteil (5) verbunden ist und ein weiterer anschließender querverlaufender Mitten-Rohrabschnitt (4c) jeweils über eine Schiebehülse (S) mit den End-Rohrabschnitten (4a, 4b) verbunden ist.

6. Vorrichtung nach einem der vorhergehenden Ansprüche, **dadurch gekennzeichnet, dass** die über die Konsole (30) mit dem Trägerelement (4) verbundenen Profilteile (5) jeweils oberhalb eines Fahrzeugschwellers (20) und beabstandet zu einer Seitenaußenwand (16) des Fahrzeugaufbaus (2) gehalten sind.

7. Vorrichtung nach einem der vorhergehenden Ansprüche, dass die Konsole (30) einerseits an einem einen Schweller (20) mitbildenden Blechformteil (20a) und andererseits an einer Wandung (21) des Fahrzeugaufbaus (2) angebunden ist.

8. Vorrichtung nach den Ansprüchen 5, 6 oder 7, **dadurch gekennzeichnet, dass** der Mitten-Rohrabschnitt (4c) einen einen Mitteltunnel (6) des Fahrzeugaufbaus (2) übergreifenden trapezförmige Bereich (T) aufweist und die anschließenden sich quer erstreckenden End-Rohrabschnitte (4a, 4b) sowie die sich an den trapezförmigen Bereich (T) anschließenden Rohrabschnitte tiefergelegen in einer Ebene (b-b) angeordnet sind und koaxial zu den End-Rohrabschnitten (4a, 4b) verlaufen.

## Claims

1. Device for absorbing lateral forces in the event of a side impact of a motor vehicle, wherein a constructional unit which provides transverse reinforcement is arranged in the vehicle body in the transverse direction of the vehicle, said constructional unit consisting of a transversely extending carrier element and of a supporting element which is connected on the end side in each case and is arranged in the region of a B pillar or a corresponding bodywork region, wherein the supporting element consists of a profile part (5) which projects upwards in a vertical plane from a transversely extending carrier element (4), is arranged such that it is passed through a bracket (30) fixed on the vehicle and comprises horizontal fastening portions (8) which are directed towards the carrier element (4) and via which the profile part (5) is fastened to the carrier element (4), and a free-standing region (A) of the profile part (5) is arranged in pillar space (R) or in the space in the bodywork region and projects from the bracket (30) at a distance from a side outer wall (16) of the vehicle body (2), **characterized in that** the profile part (5) is of approximately box-shape design and consists of two side members (11, 12) which are connected via a connecting web and are opposite each other at a distance, and the fastening portions (8) of the profile part (5), which fastening portions are arranged in a horizontal plane (Y-Y), are each arranged on the side members (11, 12) and accommodate the carrier element (4) therebetween in a retaining manner, the profile part (5) having, on the end side of the side members (11, 12), legs (14, 15) which are bent in a vertical plane (X-X) and are connected to a plate (31) which covers the end side of the profile part (5) and is directed towards the side outer wall (16), the side edges and the upper edge of the plate (31) lying in one plane with the plate (31) or the side edges (13a) and the upper edge (13b) being of curved design.

2. Device according to Claim 1, **characterized in that** the profile part (5) is fastened by the horizontal fastening portions (8) thereof to a wall of the carrier element (4), and a lower boundary of the fastening portions (8) is arranged at least in the region between a lower boundary plane (Z-Z) and an upper boundary plane, which is arranged thereabove, of the carrier part (4).

3. Device according to Claims 1 and 2, **characterized in that** the profile part (5) is designed as a sheet-metal shaped part and is in the shape of a U profile in cross section, and the horizontal fastening portions (8) are approximately at right angles to the bent legs (14, 15) of the side members (11, 12), and the connecting web between the two side members (11, 12) runs at an acute angle (α) to the adjoining first fastening portions (8).

4. Device according to one of the preceding claims, **characterized in that** the profile part (5) is fastened by the horizontally extending fastening portions (8) thereof to an end tube portion (4a) of the carrier element (4) at least in or in the vicinity of a tube centre transverse plane, the end edges (11a, 12a) of the profile part (5) being guided beyond the tube centre transverse plane and ending in front of the lower boundary plane (Z-Z).

5. Device according to one of the preceding claims, **characterized in that** the carrier element (4) consists of a tube, and the respective end tube portion (4a, 4b) of each side of the vehicle is connected to the profile part (5), and a further, adjoining, transversely extending centre tube portion (4c) is connected to the end tube portions (4a, 4b) in each case via a sliding sleeve (S).

6. Device according to one of the preceding claims, **characterized in that** the profile parts (5) which are connected to the carrier element (4) via the bracket (30) are each held above a vehicle sill (20) and at a distance from a side outer wall (16) of the vehicle body (2).

7. Device according to one of the preceding claims, **characterized in that** the bracket (30) is connected on one side to a sheet-metal shaped part (20a) which at the same time forms a sill (20) and on the other side to a wall (21) of the vehicle body (2).

8. Device according to Claims 5, 6 or 7, **characterized in that** the centre tube portion (4c) has a trapezoidal region (T) overlapping a centre tunnel (6) of the vehicle body (2), and the adjoining, transversely extending end tube portions (4a, 4b) and the tube portions adjoining the trapezoidal region (T) are arranged lower down in a plane (b-b) and run coaxially with respect to the end tube portions (4a, 4b).

## Revendications

1. Système pour absorber des forces latérales en cas de choc latéral d'un véhicule automobile, une unité fonctionnelle s'enfonçant transversalement étant disposée, dans la direction transversale du véhicule, dans la structure du véhicule, ladite unité se composant d'un élément de support s'étendant transversalement et respectivement d'un élément d'appui relié au côté d'extrémité qui est disposé dans la zone d'un montant B ou d'une zone de carrosserie correspondante, l'élément d'appui se composant d'une partie profilée (5) saillant vers le haut dans un plan vertical depuis un élément de support (4) s'étendant transversalement, ledit élément d'appui étant disposé de façon enfichée dans une console (30) fixée au véhicule et comprenant des segments de fixation (8) horizontaux orientés vers l'élément de support (4) via lesquels la partie profilée (5) est fixée à l'élément de support (4) et une zone libre (A) de la partie profilée (5) étant disposée dans l'espace de montant (R) ou dans l'espace de la zone de carrosserie et étant écartée par rapport à une paroi latérale extérieure (16) de la structure du véhicule (2) qui ressort de la console (30), **caractérisé en ce que** la partie profilée (5) prend quelque peu une forme de caisson et se compose de deux joues latérales (11, 12) reliées via un étai de liaison et écartées l'une par rapport à l'autre et **en ce que** les segments de fixation (8) de la partie profilée (5) sont respectivement disposés dans un plan horizontal (Y Y) au niveau des joues latérales (11, 12) et logent entre eux de façon bloquante l'élément de support (4), la partie profilée (5) comportant des côtés (14, 15) orientés dans un plan vertical (X-X) vers le côté frontal des joues latérales (11, 12), lesdites joues étant reliées à une plaque (31) recouvrant la face frontale de la partie profilée (5) orientée vers la paroi latérale extérieure (16), les arêtes latérales ainsi que l'arête supérieure de la plaque (31) reposant dans un plan avec la plaque (31) ou les arêtes latérales (13a) et l'arête supérieure (13b) étant réalisée de façon courbe.

2. Système selon la revendication 1, **caractérisé en ce que** la partie profilée (5) est fixée avec ses segments de fixation (8) horizontaux à une paroi de l'élément de support (4) et **en ce qu'**une délimitation inférieure des segments de fixation (8) est disposée au moins dans la zone située entre un plan de délimitation inférieur (Z-Z) et un plan de délimitation supérieur de la partie de support (4) disposée au-dessus.

3. Système selon les revendications 1 ou 2, **caractérisé en ce que** la partie profilée (5) prend la forme d'une pièce moulée en tôle et prend une forme de profilé en U en section transversale et **en ce que** les segments de fixation (8) horizontaux sont approximativement à angle droit par rapport aux côtés (14, 15) opposés des joues latérales (11, 12) et l'étai de liaison s'étend entre les deux joues latérales (11, 12) selon un angle aigu (α) par rapport aux premiers segments de fixation (8) connexes.

4. Système selon l'une quelconque des revendications précédentes, **caractérisé en ce que** la partie profilée (5) est fixée avec ses segments de fixation (8) s'étendant horizontalement à un segment d'extrémité de tube (4a) de l'élément de support (4) au moins dans ou à proximité d'un plan transversal médian de tube, les arêtes avant (11a, 12a) de la partie profilée (5) s'étendant au-delà du plan transversal médian de tube et s'étendant devant le plan de délimitation (Z-Z) inférieur.

5. Système selon l'une quelconque des revendications précédentes, **caractérisé en ce que** l'élément de support (4) se compose d'un tube et **en ce que** ledit segment d'extrémité de tube (4a, 4b) respectif est relié de chaque côté du véhicule à la partie profilée (5) et qu'un autre segment médian de tube (4c) raccordé s'étendant transversalement est respectivement relié aux segments d'extrémité de tube (4a, 4b) via la douille coulissante (S).

6. Système selon l'une quelconque des revendications précédentes, **caractérisé en ce que** les parties profilées (5) reliées à l'élément de support (4) via la console (30) sont respectivement maintenues au-dessus d'un bas de marche de véhicule (20) et écartées par rapport à une paroi latérale extérieure (16) de la structure du véhicule (2).

7. Système selon l'une quelconque des revendications précédentes, **caractérisé en ce que** la console (30) est reliée d'une part à une pièce moulée en tôle (20a) reliée d'un seul tenant à un bas de marche (20) et d'autre part à une paroi (21) de la structure du véhicule (2).

8. Système selon les revendications 5, 6 ou 7, **caractérisé en ce que** le segment médian de tube (4c) comporte une zone trapézoïdale (T) engrenant un tunnel médian (6) de la structure du véhicule (2) et **en ce que** les segments d'extrémité de tube (4a, 4b) raccordés s'étendant transversalement ainsi que les segments de tube raccordés à la zone trapézoïdale (T) sont disposés plus profondément dans un plan (b-b) et s'étendent coaxialement par rapport aux segments d'extrémité de tube (4a, 4b).
